(19) Europäisches Patentamt
European Patent Office
Office européen des brevets

(11) **EP 2 300 755 B1**

(12) **FASCICULE DE BREVET EUROPEEN**

(45) Date de publication et mention
de la délivrance du brevet:
**25.04.2012 Bulletin 2012/17**

(21) Numéro de dépôt: **09772645.9**

(22) Date de dépôt: **04.06.2009**

(51) Int Cl.:
***F25B 21/00*** *(2006.01)*

(86) Numéro de dépôt international:
**PCT/FR2009/000652**

(87) Numéro de publication internationale:
**WO 2010/000962 (07.01.2010 Gazette 2010/01)**

(54) **DISPOSITIF DE RÉFRIGÉRATION MAGNÉTIQUE ET PROCÉDÉ DE RÉFRIGÉRATION**

MAGNETKÜHLVORRICHTUNG UND KÜHLVERFAHREN

MAGNETIC REFRIGERATION DEVICE AND REFRIGERATION METHOD

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **10.06.2008 FR 0803221**

(43) Date de publication de la demande:
**30.03.2011 Bulletin 2011/13**

(73) Titulaire: **COMMISSARIAT A L'ENERGIE ATOMIQUE ET AUX ENERGIES ALTERNATIVES**
**75015 Paris (FR)**

(72) Inventeur: **DUVAL, Jean-Marc**
**F-38950 Quaix en Chartreuse (FR)**

(74) Mandataire: **Talbot, Alexandre et al**
**Cabinet Hecké**
**Europole**
**10, rue d'Arménie - BP 1537**
**38025 Grenoble Cedex 1 (FR)**

(56) Documents cités:
**WO-A-2004/059221      US-A- 3 108 444**
**US-A- 3 765 186        US-A- 5 182 914**
**US-A- 5 357 756        US-A- 5 934 077**

• **SHIRRON P ET AL: "A compact, high-performance continuous magnetic refrigerator for space missions" CRYOGENICS, ELSEVIER, KIDLINGTON, GB, vol. 41, no. 11-12, 1 novembre 2001 (2001-11-01), pages 789-795, XP004335672 ISSN: 0011-2275**

## Description

### Domaine technique de l'invention

L'invention est relative à un dispositif de réfrigération magnétique pour refroidir une charge thermique, comprenant :

- une cage d'écrantage magnétique renfermant des moyens de génération d'au moins un champ magnétique principalement dirigé dans une direction axiale,
- des premier et deuxième éléments en matériau magnétocalorique, de préférence coaxiaux, placés fixement dans ledit champ magnétique et reliés entre eux par des premiers conducteurs thermiques équipés d'un premier interrupteur thermique,
- des deuxièmes conducteurs thermiques reliant l'un desdits éléments en matériau magnétocalorique à une source froide et équipés d'un deuxième interrupteur thermique,
- des premiers et deuxièmes moyens de suspension respectivement des premier et deuxième éléments en matériau magnétocalorique.

L'invention porte également sur un procédé de réfrigération d'une charge thermique au moyen d'un dispositif selon l'invention, dans lequel un conducteur thermique relie la charge thermique au deuxième élément en matériau magnétocalorique.

### État de la technique

Un tel dispositif de réfrigération magnétique, par exemple connu du document US5934077, met en oeuvre des éléments en matériau magnétocalorique, lesquels génèrent de la chaleur lorsqu'ils sont magnétisés et absorbent de la chaleur lorsqu'ils sont démagnétisés. Des moyens de génération d'au moins un champ magnétique assurent le cycle d'aimantation/désaimantation des éléments en matériau magnétocalorique. Au moins l'un des éléments en matériau magnétocalorique est lié thermiquement, par des conducteurs thermiques comprenant éventuellement un interrupteur thermique, à une charge thermique à refroidir. Au moins l'un des éléments en matériau magnétocalorique est également lié, par d'autres conducteurs thermiques comprenant un interrupteur thermique, à une source froide pour la dissipation des calories, par exemple un bain d'hélium à 4,2K. Les éléments en matériau magnétocalorique sont également liés entre eux par d'autres conducteurs thermiques comprenant encore un autre interrupteur thermique. La gestion adaptée du séquencement des ouvertures et fermetures des différents interrupteurs thermiques permet la réalisation de différents cycles thermiques adiabatiques connus.

Dans ces dispositifs de réfrigération magnétique, la désaimantation adiabatique est avantageusement multi-étagée à chaque cycle : chaque couple formé par un élément en matériau magnétique et par les conducteurs thermiques vers un autre élément en matériau magnétique constitue un étage. De tels dispositifs permettent d'atteindre des températures plus basses (entre 10 et 100mK, typiquement entre 10 et 50 mK) que ceux à simple étage, et d'augmenter la durée de fonctionnement.

Dans cet esprit, le dispositif décrit par le document US5934077 est bi étagé : l'élément en matériau magnétocalorique lié thermiquement à la source froide assure le refroidissement de l'élément en matériau magnétocalorique lié thermiquement à la charge thermique à refroidir.

Dans le dispositif décrit par le document US5934077, les éléments en matériau magnétocalorique sont disposés axialement en ligne à l'intérieur d'une seule bobine délivrant le champ magnétique variable dirigé axialement. Ainsi, outre l'impossibilité de pouvoir réguler indépendamment les températures des deux éléments en matériau magnétocalorique, le principal inconvénient réside dans l'obtention d'une structure encombrante et complexe, et dans les pertes thermiques élevées découlant de la longueur inévitablement longue des conducteurs thermiques entre les deux éléments en matériau magnétocalorique.

Pour pouvoir réguler indépendamment les températures des deux éléments en matériau magnétocalorique, il a été également suggéré de prévoir une bobine axiale associée à chaque élément en matériau magnétocalorique : les éléments, toujours disposés en ligne dans une direction axiale, sont chacun entourés transversalement par une bobine axiale correspondante délivrant un champ magnétique propre. Mais l'encombrement reste important et les pertes thermiques élevées. D'autre part, la structure pour réaliser un écrantage magnétique entre les différents champs magnétiques et vers l'extérieur est très contraignante, par exemple par l'utilisation de bobines compensatrices.

### Objet de l'invention

L'objet de l'invention consiste à réaliser un dispositif de réfrigération magnétique dépourvu des défauts sus-mentionnés, notamment permettant de réduire l'encombrement et de diminuer les pertes thermiques pour un meilleur rendement.

Le dispositif selon l'invention est remarquable en ce que le deuxième élément en matériau magnétocalorique est logé dans une cavité délimitée intérieurement par le premier élément en matériau magnétocalorique. À titre d'exemple, perpendiculairement à la direction axiale, le premier élément en matériau magnétocalorique peut présenter une section transversale annulaire.

Une telle disposition relative entre les éléments en matériau magnétocalorique permet de diminuer la longueur axiale du dispositif de réfrigération, diminuant d'autant l'encombrement. D'autre part la longueur des conducteurs thermiques entre les éléments en matériau magnétocalorique est diminuée, limitant avantageusement les pertes thermiques.

Selon un mode de réalisation préférentiel, les moyens de génération d'au moins un champ magnétique comportent une première bobine entourant transversalement le premier élément en matériau magnétocalorique et une deuxième bobine placée dans la cavité du premier élément en matériau magnétocalorique et entourant transversalement le deuxième élément en matériau magnétocalorique. La présence d'une deuxième bobine imbriquée dans le premier élément en matériau magnétique permet de réguler indépendamment l'un de l'autre les champs magnétiques traversant les éléments en matériau magnétocalorique, pour une gestion indépendante de la température des deux étages, ce sans nécessiter un écrantage intermédiaire entre les deux bobines.

D'autres caractéristiques techniques peuvent être utilisées isolément ou en combinaison :

- les deuxièmes moyens de suspension sont thermiquement isolés par rapport aux premiers moyens de suspension,
- les deuxièmes moyens de suspension sont connectés au premier élément en matériau magnétocalorique pour assurer la suspension du deuxième élément en matériau magnétocalorique sur le premier élément en matériau magnétocalorique,
- les deuxièmes moyens de suspension sont constitués par au moins une première tige rigide de support reliée au premier élément en matériau magnétocalorique et connectée par des fils support thermiquement isolant à au moins une deuxième tige rigide de support reliée au deuxième élément en matériau magnétocalorique,
- lesdites première et deuxième tiges de support traversent l'une des parois de la cage d'écrantage magnétique et les fils support sont disposés à l'extérieur de la cage d'écrantage magnétique.

Le procédé selon l'invention est remarquable en ce qu'il comporte une pluralité de cycles thermiques successifs pendant lesquels les moyens de génération sont commandés de manière à maintenir le deuxième élément en matériau magnétocalorique à une température constante égale à une première valeur prédéterminée, chaque cycle thermique comportant successivement :

- une première période pendant laquelle les moyens de génération sont commandés de manière à maintenir le premier élément en matériau magnétocalorique à une température constante égale à une deuxième valeur prédéterminée, supérieure à la première valeur prédéterminée,
- une deuxième période pendant laquelle les moyens de génération sont commandés de manière à abaisser la température du premier élément en matériau magnétocalorique en dessous de la première valeur prédéterminée,
- une troisième période pendant laquelle les moyens de génération sont commandés de manière à maintenir le premier élément en matériau magnétocalorique à une température constante égale à une troisième valeur prédéterminée, comprise entre les première et deuxième valeurs prédéterminées.

**Description sommaire des dessins**

D'autres avantages et caractéristiques ressortiront plus clairement de la description qui va suivre d'un mode particulier de réalisation de l'invention donné à titre d'exemple non limitatif et représenté sur les figures annexées, dans lesquelles :

- la figure 1 représente un exemple de dispositif de réfrigération magnétique selon l'invention, selon une coupe axiale,
- la figure 2 représente les courbes de températures des éléments en matériau magnétocalorique pendant un procédé de réfrigération utilisant un dispositif selon l'invention,
- la figure 3 représente l'évolution dans le temps, pendant un cycle du procédé, des champs magnétiques b1 et b2 générés par les bobines de la figure 1, et du champ magnétique à l'intérieur de la bobine 17.

**Description d'un mode préférentiel de l'invention**

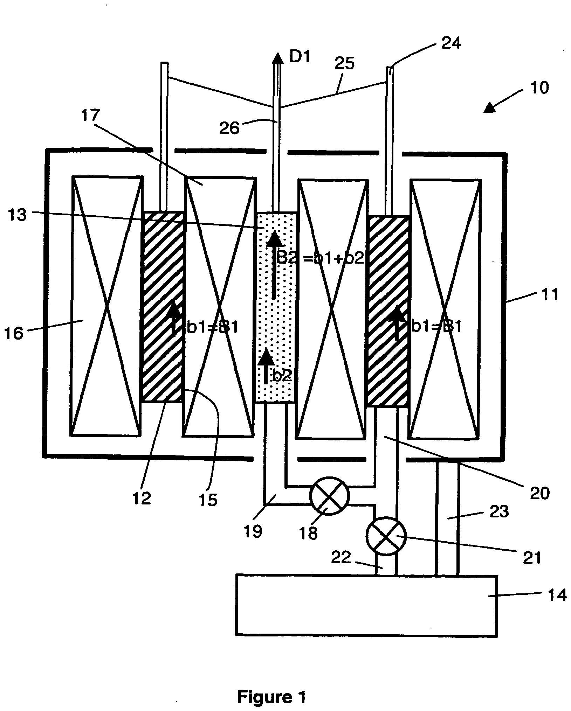

Sur la figure 1 annexée, un exemple de dispositif de réfrigération magnétique 10 à fonctionnement adiabatique est représenté, comportant une cage d'écrantage magnétique 11 renfermant des moyens de génération d'au moins un champ magnétique variable dirigé principalement dans une direction axiale D1 à l'intérieur de la cage 11. Les moyens de génération d'au moins un champ magnétique, qui seront décrits plus loin, sont placés en regard transversalement de deux éléments en matériau magnétocalorique 12, 13 placés fixement à l'intérieur de la cage 11, dans ledit au moins un champ magnétique. Les éléments 12, 13 sont, de préférence, coaxiaux. De manière schématique, les éléments 12 et 13 sont en contact avec les moyens de réalisation d'au moins un champ magnétique. Cependant, l'homme du métier aura à l'esprit que dans la réalité, il n'y a pas de contact car il faut que tous ces éléments soient isolés thermiquement.

De manière non représentée, au moins l'un des éléments 12, 13 est lié thermiquement à une charge thermique (non représentée) afin de la refroidir.

À cet effet, et comme illustré, au moins l'un des éléments 12, 13, notamment l'autre élément 12, 13, est lié thermiquement à une source froide 14, par exemple d'une manière décrite plus loin.

La cage 11, la source froide 14 et la charge thermique à refroidir sont par exemple disposées le long de la direction axiale D1, la source froide 14 et la charge thermique étant de part et d'autre de la cage 11. Toutefois leur axe d'alignement peut être distinct de la direction axiale D1, de même que la source froide 14 et la charge thermique à refroidir peuvent être disposées d'un même côté de la cage 11 sans sortir du cadre de l'invention. Il peut également être envisagé une disposition où la cage 11, la source froide 14 et la charge thermique à refroidir ne sont pas alignées.

Dans une application possible en aucun cas limitative, le dispositif de réfrigération magnétique 10 sera utilisé pour la fabrication d'un moyen de réfrigération, par exemple un cryostat, fonctionnant à proximité de la température de zéro absolu, typiquement à des températures inférieures à 1 K et plus particulièrement à des températures pouvant être inférieures à 100 mK. Les éléments en matériau magnétocalorique 12, 13 peuvent notamment être constitués par des capsules remplies par un matériau magnétocalorique, éventuellement paramagnétique, choisi en fonction de la température d'utilisation. Ces matériaux peuvent être du CMN (pour les températures inférieures à 100mk voire inférieure à 40 mK), du CCA, CPA (pour les températures comprises entre 30 et 200mK, plus particulièrement comprise entre 50 et 100 mK), du FAA, du DGG, du GGG... Avec un choix adapté de matériau magnétocalorique, il est possible d'envisager d'utiliser le dispositif de réfrigération magnétique 10 pour des températures de fonctionnement bien plus élevées, par exemple proche de la température ambiante. Pour les premières applications envisagées (température proche du zéro absolu), la source froide 14 pourra par exemple être constituée par un bain d'hélium présentant une température par exemple comprise entre 1,5K et 4,2K.

Les éléments en matériau magnétocalorique 12, 13 ont pour propriété principale de générer de la chaleur lorsqu'elles sont magnétisées et d'absorber de la chaleur lorsqu'elles sont démagnétisées. Les moyens de génération d'au moins un champ magnétique variable dans lequel sont placés fixement les éléments 12, 13 ont pour rôle d'appliquer aux éléments 12, 13 les cycles d'aimantation et de désaimantation.

Conformément à un aspect de l'invention, le premier élément en matériau magnétocalorique 12 délimite intérieurement une cavité 15 à l'intérieur de laquelle est logé le deuxième élément en matériau magnétocalorique 13. Dans l'exemple non limitatif représenté, le premier élément en matériau magnétocalorique 12 présente une section transversale de forme annulaire, perpendiculairement à la direction axiale D1. Il en résulte que l'élément 12 a une surface externe cylindrique. D'autre part, la cavité 15 se présente sous la forme d'un cylindre dirigé selon D1.

La surface externe cylindrique du premier élément 12 est montée axialement à l'intérieur du volume interne d'une première bobine 16 renfermée dans l'espace délimité par la cage d'écrantage 11. D'autre part, une deuxième bobine 17 est montée axialement à l'intérieur de la cavité 15 d'une manière que le deuxième élément en matériau magnétocalorique 13 soit disposé à l'intérieur du volume interne de la deuxième bobine 17. De cette manière, la première bobine 16 entoure transversalement le premier élément en matériau magnétocalorique 12 et la deuxième bobine 17 est placée dans la cavité 15 du premier élément en matériau magnétocalorique 12 et entoure transversalement le deuxième élément en matériau magnétocalorique 13. Les première et deuxième bobines 16, 17 sont de préférence coaxiales et centrées sur la direction D1, d'une manière que la deuxième bobine 17 est transversalement interposée entre les premier et deuxième éléments en matériau magnétocalorique 12, 13. La combinaison des première et deuxième bobines 16, 17, accompagnées de leur moyens d'alimentation contrôlée, constitue les moyens de génération d'au moins un champ magnétique, comme il le sera détaillé plus loin.

La notion de direction transversale correspond à l'ensemble des directions incluses dans tout plan perpendiculaire à la direction axiale D1.

De manière non représentée, la liaison thermique entre le dispositif de réfrigération magnétique 10 et la charge thermique à refroidir peut par exemple être constituée par un conducteur thermique reliant la charge thermique et le deuxième élément en matériau magnétocalorique 13. Ce conducteur thermique peut éventuellement être équipé d'un interrupteur thermique.

Pour constituer les deux étages de refroidissement du dispositif de réfrigération 10 dans lequel, dans sa variante représentée sur la figure 1, la désaimantation adiabatique est bi étagée, les éléments en matériau magnétocalorique 12, 13 sont reliés entre eux par des premiers conducteurs thermiques équipés d'un premier interrupteur thermique 18. Du côté du premier élément 12 par rapport à l'interrupteur thermique 18, les premiers conducteurs thermiques sont constitués par un premier bus thermique 20. Du côté du deuxième élément 13 par rapport à l'interrupteur thermique 18, les premiers conducteurs thermiques sont constitués par un deuxième bus thermique 19.

De manière complémentaire, un troisième bus thermique 22 relie thermiquement la source froide 14 à un point du premier bus thermique 20 intermédiaire entre le premier interrupteur 18 et le premier élément 12. Le troisième bus thermique 22 est équipé d'un deuxième interrupteur thermique 21. Le troisième bus thermique 22, en complément d'une partie de premier bus thermique 20 du côté du premier élément 12, constituent des deuxièmes conducteurs thermiques reliant le premier élément 12 à la source froide 14, les deuxièmes conducteurs thermiques comprenant le deuxième interrupteur thermique 21. Toutefois, en fonction de l'étage attribué à chaque élément 12, 13, il est possible de prévoir que les deuxième conducteurs thermiques relient le deuxième élément 13 à la source froide 14. Il n'existe pas de position privilégiée des premiers et deuxièmes conducteurs thermiques, leur position relative dépend de l'utilisation qui est recherchée. D'une manière générale, l'interrupteur 21 peut être en contact thermique soit avec le bus thermique 20 soit avec le premier bus thermique 19. Le choix de la position de l'interrupteur 21 peut être réalisé en fonction des volumes de matériaux magnétiques nécessaires de chaque étage, des matériaux composant les suspensions mécaniques à disposition et d'une optimisation de la masse totale de l'ensemble.

Pour le maintien en température de la cage d'écrantage 11, des troisièmes conducteurs thermiques relient la cage 11 à la source froide 14. Les troisièmes conducteurs thermiques sont constitués par un quatrième bus thermique 23. Pour le maintien en température des bobines, il est possible d'utiliser un lien thermique avec la cage d'écrantage, un lien thermique avec la source froide ou un lien thermique avec les matériaux magnétocaloriques.

Le maintien en place des éléments en matériau magnétocalorique 12, 13 à l'intérieur de la cage d'écrantage 11 est respectivement réalisé par des premiers et deuxièmes moyens de suspension, afin d'éviter les contacts directs entre les éléments 12, 13 et la cage 11 et/ou les bobines 16, 17. Pour limiter les pertes thermiques, les deuxièmes moyens de suspension sont thermiquement isolés par rapport aux premiers moyens de suspension. Seuls les deuxièmes moyens de suspension sont représentés. D'une manière générale, les premiers moyens de suspension peuvent être entre n'importe quelle partie solidaire de la source froide et les éléments 12, si l'interrupteur thermique relie la source froide au bus 20. De manière analogue, les premiers moyens de suspension peuvent être entre n'importe quelle partie solidaire de la source froide et les éléments 13 si l'interrupteur thermique 21 relie la source froide au bus 21.

Par exemple les premiers moyens de suspension (non représentés) peuvent être constitués par au moins une tige rigide de support reliée au premier élément en matériau magnétocalorique 12 et connectée par des fils support thermiquement isolant, par exemple en Kevlar®, à au moins une connexion solidaire de la cage d'écrantage 11. Avantageusement, chaque moyen de suspension est composé d'au moins une partie thermiquement isolante, par exemple par des fils de kevlar ou des fils de carbone ou des tubes de fibre de carbone.

Pour limiter les pertes thermiques, les deuxièmes moyens de suspension qui assurent le maintien du deuxième élément 13 à l'intérieur du premier élément 12 ne comprennent aucune partie commune avec les premiers moyens de suspension, afin de pouvoir supprimer tout lien thermique entre le deuxième élément 13 et la cage 11. Au contraire, les deuxièmes moyens de suspension sont connectés au premier élément en matériau magnétocalorique 12 pour assurer la suspension du deuxième élément en matériau magnétocalorique 13 sur le premier élément en matériau magnétocalorique 12. Il n'existe pas de position privilégiée des premiers et deuxièmes moyens de suspension, cependant, il est important qu'il n'y ait pas un échange thermique entre les éléments 12 et 13. L'intérêt de cette disposition est que les pertes causées par les moyens de suspensions sur l'étage le plus froid (l'élément 13 dans l'exemple illustré) sont fortement réduits par le fait que ces moyens de suspension s'appuient sur un étage à température intermédiaire (ici l'élément 12) plutôt que sur les parties dont la température est égale ou sensiblement égale à celle de la source froide, c'est-à-dire par exemple la cage 11 ou la source froide 14.

Dans un mode de réalisation privilégié, il est intéressant de relier mécaniquement les éléments magnétocaloriques 13 à la base 11 et les éléments 12 à l'élément 13. Cette inversion est bénéfique notamment si la source froide est reliée au bus thermique 19 par l'intermédiaire de l'interrupteur thermique 21. Ce mode de réalisation est donc légèrement différent de celui illustré à la figure 1 dans lequel la source froide est reliée au bus thermique 20.

Les deuxièmes moyens de suspension sont constitués, comme illustré uniquement à titre d'exemple, par au moins une première tige rigide de support 24 (ici au nombre de trois) reliée au premier élément en matériau magnétocalorique 12 et connectée par des fils de support thermiquement isolant 25 à au moins une deuxième tige rigide de support 26 (une seule dans l'exemple illustré) reliée au deuxième élément en matériau magnétocalorique 13. Les première et deuxième tiges de support 24, 26 traversent l'une (supérieure) des parois de la cage d'écrantage magnétique 11 et les fils support 25 sont disposés à l'extérieur de la cage d'écrantage magnétique 11. Les fils de support 25 sont par exemple en Kevlar®.

Les différents interrupteurs thermiques peuvent être constitués par des interrupteurs connus sous le nom anglo-saxon « gas-gap » avantageusement insensibles aux champs magnétiques. Leur utilisation est envisageable pour une température de fonctionnement au-dessus de 200 mK. Pour des températures inférieures, les interrupteurs thermiques peuvent être de type supraconducteur ou de type magnétorésistif, tous deux nécessitant un emplacement où la valeur du/des champ(s) magnétique(s) est relativement faibles. Tout autre type d'interrupteur thermique adapté peut être envisagé.

Dans ce qui précède, les bobines 16, 17 sont des bobines de type solénoïde, fixes et comportent, de préférence, des enroulements conducteurs en spirale multi spires, alimentés en courant continu de valeur ajustable. Les bobines 16, 17 sont de préférence coaxiales et l'axe des bobines 16, 17 est, de préférence, confondu avec l'axe des éléments 12, 13. L'ajustement de la valeur du courant d'alimentation de chacune des bobines 16, 17 a pour effet de régler le flux du champ magnétique généré dans le volume interne délimité par celle-ci, ce champ magnétique étant dirigé principalement dans la direction axiale D1. En nommant b1 et b2 le champ magnétique (en Teslas T) généré respectivement par la première et la deuxième bobines 16, 17 dans son volume interne, alors les équations suivantes sont approximativement vérifiées :

$$b1 = N1*I1*\mu0$$

$$b2 = N2*I2*\mu0$$

où :

- N1, N2 correspondent respectivement au nombre de spires des bobines 16, 17, par mètre,
- I1, I2 correspondent respectivement au courant d'alimentation des bobines 16, 17, en ampères A,
- $\mu0$ est la perméabilité magnétique égale à $4*\pi*10^{-7}$.

Les simulations numériques montrent que le champ magnétique généré respectivement par la première et la deuxième bobines 16, 17 transversalement à l'extérieur de son volume interne est approximativement nul ou en tout cas suffisamment homogène. De plus, le champ magnétique généré par la deuxième bobine 17 transversalement à l'extérieur de son volume interne est suffisamment homogène pour pouvoir être annulé avec le champ magnétique, également homogène, de la première bobine 16. De ce fait, le premier élément en matériau magnétocalorique 12 est placé dans un champ magnétique B1 sensiblement égal à b1. Par contre, compte tenu du fait que la deuxième bobine 17 est placée dans le champ b1 généré par la première bobine 16, le deuxième élément en matériau magnétocalorique 13 est placé dans un champ magnétique B2 égal à la somme de b1 et b2.

En résumé, en notant B1 et B2 les champs magnétiques, globalement homogènes, dans lesquels sont placés respectivement les premier et deuxième éléments en matériau magnétocalorique 12, 13, alors B1 = b1, et B2 = b1 +b2. Il en résulte que :

$$B1 = N1*I1*\mu0$$

$$B2 = (N1*I1+N2*I2)*\mu0$$

En première approximation, il en ressort que les champs B1 et B2 peuvent être contrôlés indépendamment l'un de l'autre en faisant varier les courants I1 et I2.

En pratique, les températures des éléments 12, 13 sont respectivement ajustées par les valeurs du flux des champs magnétiques B1 et B2 dans lesquels ils sont placés. La température du premier élément 12 est donc directement modulée par la valeur du courant I1 alimentant la première bobine 16. La valeur de I1 étant choisie en fonction de la température désirée pour le premier élément 12, la température du deuxième élément 13 est modulée par la valeur du courant I2 alimentant la deuxième bobine 17. Les variations des courants d'alimentation I1 et I2 provoquent les aimantations et désaimantations successives subies par les éléments 12, 13.

Des simulations numériques montrent qu'il est possible de placer le premier élément 12 périphérique dans un champ magnétique B1 important (environ 0,8 T) avec un champ magnétique B2 résiduel très faible (inférieur à 0,1 T) dans lequel est placé le deuxième élément 13 central. D'autres variantes indiquent qu'il est possible à l'inverse de plonger le deuxième élément 13 central dans un champ magnétique B2 très homogène tout en maintenant un champ magnétique B1 dans lequel est placé le premier élément 12 périphérique qui soit homogène et de préférence quasiment nul.

Le champ magnétique généré respectivement par la première et la deuxième bobines 16, 17 transversalement à l'extérieur de son volume interne étant approximativement nul, il en résulte qu'aucun écrantage magnétique entre les différents champs magnétiques n'est nécessaire, de même qu'envers l'extérieur. Toutefois, il envisageable de prévoir des écrans magnétiques de petites tailles, par exemple en fer, pour protéger l'interrupteur thermique. La forme de la cage d'écrantage peut être choisie pour augmenter l'homogénéité du champ magnétique et pour améliorer l'indépendance de chaque champ magnétique B1 et B2.

Toutefois dans une variante simplifiée, les moyens de génération d'au moins un champ magnétique peuvent être constitués par une seule bobine 16 disposée de manière à entourer le premier élément en matériau magnétocalorique 12, lui-même logeant le deuxième élément en matériau magnétocalorique 13 dans la cavité 15 qu'il délimite intérieurement.

Les moyens de génération d'au moins un champ magnétique (ici au nombre de deux : b1 et b2) décrits ci-dessus ne sont qu'un exemple de réalisation en aucun cas limitatif, et peuvent être remplacés par des électroaimants commandés respectivement par des générateurs de courants variables pour provoquer les aimantations et désaimantations successives subies par les éléments 12, 13. Ces moyens peuvent aussi être constitués par des aimants permanents reliés mécaniquement et respectivement à des moyens qui permettent de les déplacer, par exemple dans la direction axiale D1, par rapport aux éléments 12, 13.

En pratique, pour limiter les effets du champ magnétique généré par la première bobine 16 sur la deuxième bobine 17 (phénomène d'inductance mutuelle), une solution pourra consister à générer des champs magnétiques b1 et b2 de sens opposés.

Quelle que soit la variante, le nombre d'étages de désaimantation peut être supérieur ou égal à deux, en augmentant de manière correspondante le nombre d'éléments en matériau magnétocalorique imbriqués les uns dans les autres, deux éléments adjacents étant séparés par une bobine intermédiaire transversalement.

La forme de la cavité 15 pourra être quelconque, munie d'un fond ou non, dès lors que le deuxième élément en matériau magnétocalorique 13 peut être logé au moins partiellement à l'intérieur.

Dans la variante illustrée, les éléments 12, 13 et les bobines 16, 17 possèdent tous le même axe de révolution le long duquel ils sont positionnés axialement de manière à avoir tous un même plan transversal de symétrie, ce plan transversal étant perpendiculaire à la direction axiale D1.

Le dispositif de réfrigération magnétique 10 qui vient d'être décrit pourra être utilisé pour mettre en oeuvre l'ensemble des cycles thermiques adiabatiques connus.

D'une manière générale, l'homogénéité du champ magnétique B1 est définie de manière à ce qu'il soit possible de modifier le champ dans chacun des deux éléments magnétocaloriques de façon indépendante. Si le champ magnétique qui est généré par la bobine intérieure 17 sur l'espace annulaire extérieur 12 n'est pas nul, mais suffisamment homogène, il est alors possible de compenser ce champ au moyen de celui créé par les bobines 16. Dans un mode de réalisation particulier, il n'est pas nécessaire que ces champs soient indépendants les uns des autres, il est suffisant que des couples de champ B1/B2 soit accessibles dans les zones 12 et 13. Les couples de champ représentent des conditions bien spécifiques dans lesquelles les champs se compensent et puissent être assimilé à un champ nul. Ces couples de champ sont obtenus typiquement en déterminant des couples de courant d'alimentation pour les bobines 16 et 17.

A titre d'exemple, un champ homogène est un champ qui présente dans le volume des éléments magnétocaloriques 12 et 13 une variation inférieure à 10%, de préférence inférieure à 5% du champ nominal.

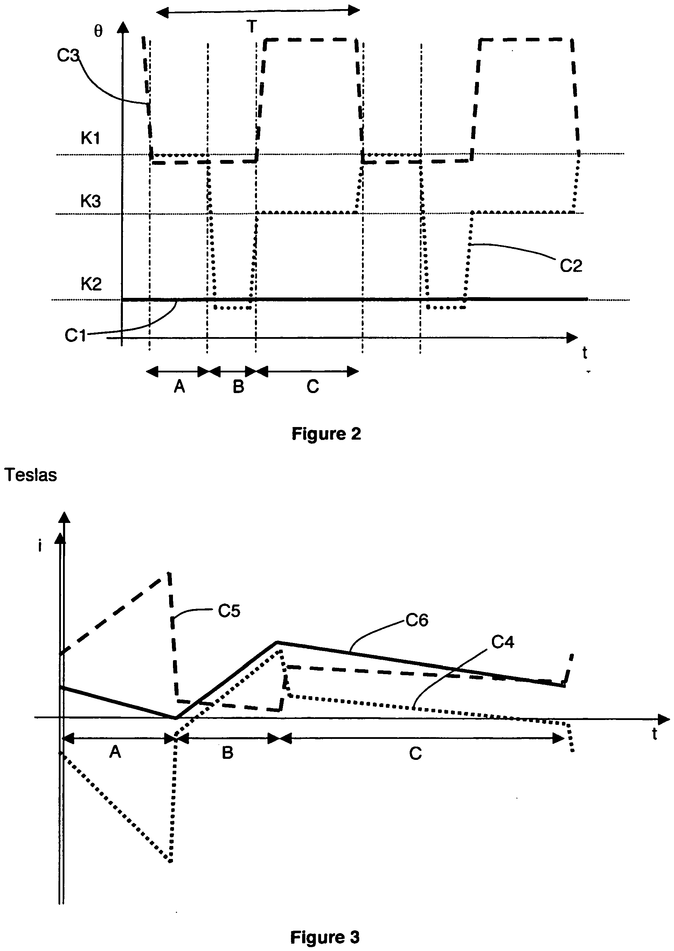

Un procédé de réfrigération, objet d'un deuxième aspect de l'invention, sera décrit ci-dessous en référence aux figures 2 et 3. Ce procédé de réfrigération d'une charge thermique est réalisé au moyen d'un dispositif selon le premier aspect de l'invention, dans lequel un conducteur thermique (non représenté) relie la charge thermique (non représentée) au deuxième élément en matériau magnétocalorique 13. Le deuxième élément 13, logé dans la cavité 15, constitue un premier étage de refroidissement. Le premier élément 12, périphérique, constitue un deuxième étage de refroidissement. La source froide 14 à laquelle le premier élément 12 est relié thermiquement comporte alors un étage de refroidissement supplémentaire. Comme précédemment, les premier et deuxième étages de refroidissement sont réalisés par désaimantation adiabatique. Pour réaliser le troisième étage de refroidissement, la source froide 14 peut comporter un élément en matériau magnétocalorique supplémentaire, ayant une section transversale annulaire et entourant le premier élément 12. Dans une variante, pour réaliser le troisième étage de refroidissement, la source froide 14 peut comporter un réfrigérateur à adsorption, plus connu sous le sigle « SCO » (pour « sorption cooler » en anglais). Dans l'exemple de procédé selon l'invention décrit ci-dssous, le troisième étage de refroidissement est réalisé par une SCO.

En référence à la figure 2, le procédé de refroidissement comporte une pluralité de cycles thermiques de période T, successifs et répétés, pendant lesquels les moyens de génération, c'est-à-dire les bobines 16, 17, sont commandés de manière à maintenir le deuxième élément en matériau magnétocalorique 13 à une température constante égale à une première valeur prédéterminée K2. L'évolution constante, dans le temps t (en abscisse), de la température θ2 (en K, en ordonnée) du deuxième élément 13 est représentée par la première courbe C1 constituée par une droite horizontal.

Chaque cycle thermique de période T comporte successivement :

- une première période A pendant laquelle les moyens de génération 16, 17 sont commandés de manière à maintenir le premier élément en matériau magnétocalorique 12 à une température θ1 (en K, en ordonnée) constante égale à une deuxième valeur prédéterminée K1, supérieure à la première valeur prédéterminée K2,

- une deuxième période B pendant laquelle les moyens de génération 16, 17 sont commandés de manière à abaisser la température θ1 du premier élément en matériau magnétocalorique 12 en dessous de la première valeur prédéterminée K2,

- et une troisième période C pendant laquelle les moyens de génération 16, 17 sont commandés de manière à maintenir le premier élément en matériau magnétocalorique 12 à une température θ1 constante égale à une troisième valeur prédéterminée K3, comprise entre les première et deuxième valeurs prédéterminées K1, K2.

L'évolution, dans le temps t (en abscisse), de la température θ1 (en K, en ordonnée) du premier élément 12 est représentée par la deuxième courbe C2.

La troisième courbe C3 de la figure 2 représente l'évolution dans le temps t de la température instantanée prise par la SCO constitutive du troisième étage de refroidissement. Durant les première et deuxième périodes A et B, la température de la SCO est maintenue constante, par des moyens de commande adaptés au type de SCO, à une valeur prédéterminée légèrement inférieure à la deuxième valeur prédéterminée K1. Par contre, durant la troisième période C, la température de la SCO est maintenue constante à une valeur prédéterminée nettement supérieure à la deuxième valeur prédéterminée K1.

À titre d'exemple, la première valeur prédéterminée K2 est sensiblement égale à 50 mK, la deuxième valeur prédéterminée K1 est sensiblement comprise entre 350 mK et 400 mK, et la valeur prédéterminée prise par la SCO pendant la troisième période C est de l'ordre de 2,5 K.

La courbe C4 de la figure 3 illustre l'évolution dans le temps t (en abscisse), du champ magnétique b2 généré par la deuxième bobine 17, proportionnel à chaque instant au courant d'alimentation I2 de la deuxième bobine 17. Durant la première période A, la courbe C4 est une droite décroissante indiquant que le champ b2 diminue progressivement pour passer d'une valeur d'environ -0,1 T à une valeur d'environ -0,4 T. Dans la deuxième période B, le courant d'alimentation 12 évolue de manière que le champ b2 augmente, de manière proportionnelle, très rapidement jusqu'à une valeur proche de -0,05 T, puis moins rapidement jusqu'à une valeur environ égale à +0,2 T. Enfin durant la troisième période C, le courant d'alimentation 12 évolue de manière que le champ b2 diminue de manière constante jusqu'à une valeur sensiblement égale à +0,1 T. Le courant évolue ensuite de manière constante jusqu'à une valeur proche de -0,05 T puis évolue rapidement jusqu'à une valeur égale à -0,1T. Les valeurs positives et négatives des champs magnétiques représentent simplement des champs magnétiques de sens opposés.

Parallèlement à la génération du champ b2, un champ magnétique b1 variable est généré par la première bobine 16. La courbe C5 de la figure 3 illustre l'évolution dans le temps t (en abscisse), du champ magnétique b1 généré par la première bobine 16, proportionnel à chaque instant au courant d'alimentation I1 de la première bobine 16. Durant la première période A, la courbe C5 est une droite croissante indiquant que le champ b1 augmente continûment pour passer d'une valeur d'environ +0,2 T à une valeur d'environ +0,4 T. Dans la deuxième période B, le courant d'alimentation I1 évolue de manière que le champ b1 diminue, de manière proportionnelle à I1, très rapidement jusqu'à une valeur proche de +0,05 T, puis moins rapidement jusqu'à une valeur environ égale à +0,025 T. Enfin durant la troisième période C, le courant d'alimentation I1 évolue de manière que le champ b1 augmente très rapidement jusqu'à une valeur proche de +0,15 T, puis diminue lentement jusqu'à une valeur environ égale à +0,125 T. Ensuite, le champ b1 augmente très rapidement jusqu'à une valeur proche de +0,2 T.

La courbe C6 de la figure 3 illustre l'évolution dans le temps t (en abscisse), du champ magnétique B2 dans lequel est placé le deuxième élément en matériau magnétocalorique 13. À chaque instant, un point de la courbe C6 correspond à la somme des points correspondants des courbes C4 et C5.

## Revendications

**1.** Dispositif de réfrigération magnétique (10) pour refroidir une charge thermique, comprenant :

- une cage d'écrantage magnétique (11) renfermant des moyens de génération (16, 17) d'au moins un champ magnétique (b1, b2) principalement dirigé dans une direction axiale (D1),
- des premier et deuxième éléments en matériau magnétocalorique (12, 13), placés fixement dans ledit champ magnétique (b1, b2) et reliés entre eux par des premiers conducteurs thermiques (19, 20) équipés d'un premier interrupteur thermique (18),
- des deuxièmes conducteurs thermiques (20, 22) reliant l'un (12) desdits éléments en matériau magnétocalorique (12, 13) à une source froide (14) et équipés d'un deuxième interrupteur thermique (21),
- des premiers et deuxièmes moyens de suspension maintenant respectivement les premier et deuxième éléments en matériau magnétocalorique (12, 13) en place à l'intérieur de la cage d'écrantage (11).
- un conducteur thermique reliant la charge thermique au deuxième élément en matériau magnétocalorique (13),

**caractérisé en ce que** le deuxième élément en matériau magnétocalorique (13) est logé dans une cavité (15) délimitée intérieurement par le premier élément en matériau magnétocalorique (12).

**2.** Dispositif selon la revendication 1, **caractérisé en ce que** perpendiculairement à la direction axiale (D1), le premier élément en matériau magnétocalorique (12) présente une section transversale annulaire.

**3.** Dispositif selon l'une des revendications 1 et 2, **caractérisé en ce que** les moyens de génération (16, 17) d'au moins un champ magnétique (b1, b2) comportent une première bobine (16) entourant transversalement le premier élément en matériau magnétocalorique (12) et une deuxième bobine (17) placée dans la cavité (15) du premier élément en matériau magnétocalorique (12) et entourant transversalement le deuxième élément en matériau magnétocalorique (13).

**4.** Dispositif selon la revendication 3, **caractérisé en ce que** les première et deuxième bobines (16, 17) et les premier et deuxième éléments en matériau magnétocalorique sont coaxiaux et possèdent un même plan transversal de symétrie.

**5.** Dispositif selon l'une des revendications 1 à 4, **caractérisé en ce que** les deuxièmes moyens de suspension sont thermiquement isolés par rapport aux premiers moyens de suspension.

**6.** Dispositif selon l'une des revendications 1 à 5, **ca-**

**ractérisé en ce que** les deuxièmes moyens de suspension sont connectés au premier élément en matériau magnétocalorique (12) pour assurer la suspension du deuxième élément en matériau magnétocalorique (13) sur le premier élément en matériau magnétocalorique (12).

7. Dispositif selon la revendication 6, **caractérisé en ce que** les deuxièmes moyens de suspension sont constitués par au moins une première tige rigide de support (24) reliée au premier élément en matériau magnétocalorique (12) et connectée par des fils support thermiquement isolant (25) à au moins une deuxième tige rigide de support (26) reliée au deuxième élément en matériau magnétocalorique (13).

8. Dispositif selon la revendication 7, **caractérisé en ce que** lesdites première et deuxième tiges de support (24, 26) traversent l'une des parois de la cage d'écrantage magnétique (11) et les fils support (25) sont disposés à l'extérieur de la cage d'écrantage magnétique (11).

9. Dispositif selon l'une des revendications 1 à 8, **caractérisé en ce que** les premier et deuxième éléments en matériau magnétocalorique (12, 13) sont isolés thermiquement des moyens de réalisation d'au moins un champ magnétique au moyen des premiers et deuxièmes moyens de suspension.

10. Procédé de réfrigération d'une charge thermique au moyen d'un dispositif selon l'une quelconque des revendications 1 à 9, procédé **caractérisé en ce qu'**il comporte une pluralité de cycles thermiques successifs pendant lesquels les moyens de génération (16, 17) sont commandés de manière à maintenir le deuxième élément en matériau magnétocalorique (13) à une température constante égale à une première valeur prédéterminée (K2), chaque cycle thermique comportant successivement :

   - une première période (A) pendant laquelle les moyens de génération (16, 17) sont commandés de manière à maintenir le premier élément en matériau magnétocalorique (12) à une température constante égale à une deuxième valeur prédéterminée (K1), supérieure à la première valeur prédéterminée (K2),
   - une deuxième période (B) pendant laquelle les moyens de génération (16, 17) sont commandés de manière à abaisser la température du premier élément en matériau magnétocalorique (12) en dessous de la première valeur prédéterminée (K2),
   - une troisième période (C) pendant laquelle les moyens de génération (16, 17) sont commandés de manière à maintenir le premier élément en matériau magnétocalorique (12) à une température constante égale à une troisième valeur prédéterminée (K3), comprise entre les première et deuxième valeurs prédéterminées (K1, K2).

**Claims**

1. A magnetic refrigeration device (10) for cooling a thermal load comprising:

   - a magnetic screening cage (11) containing means for generating (16, 17) at least one magnetic field (b1, b2) mainly directed in an axial direction (D1),
   - first and second elements made from magnetocaloric material (12, 13), placed fixedly in said magnetic field (b1, b2) and connected to one another by first thermal conductors (19, 20) equipped with a first thermal switch (18),
   - second thermal conductors (20, 22) connecting one (12) of said elements made from magnetocaloric material (12, 13) to a cold source (14) and equipped with a second thermal switch (21),
   - first and second means for suspending respectively first and second elements made from magnetocaloric material (12, 13) in place inside the screening cage (11),
   - a thermal conductor coupling the thermal load to the second element made from magnetocaloric material (13),

   **characterized in that** the second element made from magnetocaloric material (13) is housed in a cavity (15) delineated internally by the first element made from magnetocaloric material (12).

2. The device according to claim 1, **characterized in that** perpendicularly to the axial direction (D1), the first element made from magnetocaloric material (12) presents an annular transverse cross-section.

3. The device according to one of claims 1 and 2, **characterized in that** the means for generating (16, 17) at least one magnetic field (b1, b2) comprise a first coil (16) transversely surrounding the first element made from magnetocaloric material (12) and a second coil (17) placed in the cavity (15) of the first element made from magnetocaloric material (12) and transversely surrounding the second element made from magnetocaloric material (13).

4. The device according to claim 3, **characterized in that** the first and second coils (16, 17) and the first and second elements made from magnetocaloric material are coaxial and have the same transverse plane of symmetry.

**5.** The device according to one of claims 1 to 4, **characterized in that** the second means for suspending are thermally insulated with respect to the first means for suspending.

**6.** The device according to one of claims 1 to 5, **characterized in that** the second means for suspending are connected to the first element made from magnetocaloric material (12) to perform suspension of the second element made from magnetocaloric material (13) on the first element made from magnetocaloric material (12).

**7.** The device according to claim 6, **characterized in that** the second means for suspending are formed by at least a first rigid support rod (24) coupled to the first element made from magnetocaloric material (12) and connected by thermally insulating support wires (25) to at least a second rigid support rod (26) coupled to the second element made from magnetocaloric material (13).

**8.** The device according to claim 7, **characterized in that** said first and second support rods (24, 26) pass through one of the walls of the magnetic screening cage (11) and the support wires (25) are arranged outside the magnetic screening cage (11).

**9.** The device according to one of claims 1 to 8, **characterized in that** the first and second elements made from magnetocaloric material (12, 13) are thermally insulated from the means for generating (16, 17) at least one magnetic field (b1, b2) by means of first and second means for suspending.

**10.** A method for refrigerating a thermal load by means of a device according to any one of claims 1 to 9, method **characterized in that** it comprises a plurality of successive thermal cycles during which the means for generating (16, 17) are controlled so as to maintain the second element made from magnetocaloric material (13) at a constant temperature equal to a first predefined value (K2), each thermal cycle successively comprising:

a first period (A) during which the means for generating (16, 17) are controlled so as to maintain the first element made from magnetocaloric material (12) at a constant temperature equal to a second predefined value (K1), greater than the first predefined value (K2),
- a second period (B) during which the means for generating (16, 17) are controlled so as to lower the temperature of the first element made from magnetocaloric material (12) below the first predefined value (K2),
- a third period (C) during which the means for generating (16, 17) are controlled so as to maintain the first element made from magnetocaloric material (12) at a constant temperature equal to a third predefined value (K3) comprised between the first and second predefined values (K1, K2).


**Patentansprüche**

**1.** Vorrichtung zur magnetischen Kühlung (10), um eine Wärmelast zu kühlen, umfassend:

- einen magnetischen Abschirmungskäfig (10), in dem Mittel zur Erzeugung (16, 17) wenigstens eines hauptsächlich in eine axiale Richtung (D1) gerichteten Magnetfeldes (b1, b2) enthalten sind,
- ein erstes und ein zweites Element aus magnetokalorischem Material (12, 13), die in dem Magnetfeld (b1, b2) fest angeordnet sind und die durch erste Wärmeleiter (19, 20), welche mit einem ersten Thermoschalter (18) ausgestattet sind, untereinander verbunden sind,
- zweite Wärmeleiter (20, 22), die das eine (12) der Elemente aus magnetokalorischem Material (12, 13) mit einer kalten Quelle (14) verbinden und die mit einem zweiten Thermoschalter (21) ausgestattet sind,
- erste und zweite Aufhängungsmittel, die das erste bzw. das zweite Element aus magnetokalorischem Material (12, 13) innerhalb des Absrhirmungskäfigs (11) an Ort und Stelle halten,
- einen Wärmeleiter, der die Wärmelast mit dem zweiten Element aus magnetokalorischem Material (13) verbindet,

**dadurch gekennzeichnet, dass** das zweite Element aus magnetokalorischem Material (13) in einem Hohlraum (15), der innen durch das erste Element aus magnetokalorischem Material (12) begrenzt ist, untergebracht ist.

**2.** Vorrichtung nach Anspruch 1, **dadurch gekennzeichnet, dass** senkrecht zu der axialen Richtung (D1) das erste Element aus magnetokalorischem Material (12) einen ringförmigen Querschnitt aufweist.

**3.** Vorrichtung nach einem der Ansprüche 1 und 2, **dadurch gekennzeichnet, dass** die Mittel zur Erzeugung (16, 17) wenigstens eines Magnetfeldes (b1, b2) eine erste Spule (16) umfassen, welche das erste Element aus magnetokalorischem Material (12) quer umschließt, sowie eine zweite Spule (17), die in dem Hohlraum (15) des ersten Elements aus magnetokalorischem Material (12) angeordnet ist und das zweite Element aus magnetokalorischem Material (13) quer umschließt.

**4.** Vorrichtung nach Anspruch 3, **dadurch gekennzeichnet, dass** die erste und die zweite Spule (16, 17) sowie das erste und das zweite Element aus magnetokalorischem Material koaxial sind und eine gleiche Symmetriequerebene besitzen.

**5.** Vorrichtung nach einem der Ansprüche 1 bis 4, **dadurch gekennzeichnet, dass** die zweiten Aufhängungsmittel gegenüber den ersten Aufhängungsmitteln wärmeisoliert sind.

**6.** Vorrichtung nach einem der Ansprüche 1 bis 5, **dadurch gekennzeichnet, dass** die zweiten Aufhängungsmittel mit dem ersten Element aus magnetokalorischem Material (12) verbunden sind, um die Aufhängung des zweiten Elements aus magnetokalorischem Material (13) an dem ersten Element aus magnetokalorischem Material (12) sicherzustellen.

**7.** Vorrichtung nach Anspruch 6, **dadurch gekennzeichnet, dass** die zweiten Aufhängungsmittel von wenigstens einer ersten starren Haltestange (24) gebildet sind, welche mit dem ersten Element aus magnetokalorischem Material (12) verbunden ist und über wärmeisolierende Haltefäden (25) mit wenigstens einer mit dem zweiten Element aus magnetokalorischem Material (13) verbundenen zweiten starren Haltestange (26) verbunden ist.

**8.** Vorrichtung nach Anspruch 7, **dadurch gekennzeichnet, dass** die erste und die zweite Haltestange (24, 26) die eine der Wände des magnetischen Abschirmungskäfigs (11) durchgreifen und die Haltefäden (25) außerhalb des magnetischen Abschirmungskäfigs (11) angeordnet sind.

**9.** Vorrichtung nach einem der Ansprüche 1 bis 8, **dadurch gekennzeichnet, dass** das erste und das zweite Element aus magnetokalorischem Material (12, 13) von den Mitteln zur Erzeugung wenigstens eines Magnetfeldes mit Hilfe der ersten und zweiten Aufhängungsmittel wärmeisoliert sind.

**10.** Verfahren zur Kühlung einer Wärmelast mit Hilfe einer Vorrichtung nach einem der Ansprüche 1 bis 9, Verfahren, welches **dadurch gekennzeichnet ist, dass** es eine Vielzahl von aufeinanderfolgenden Wärmezyklen umfasst, im Laufe derer die Erzeugungsmittel (16, 17) derart gesteuert werden, dass das zweite Element aus magnetokalorischem Material (13) auf einer konstanten Temperatur, welche gleich einem ersten vorbestimmten Wert (K2) ist, gehalten wird, wobei jeder Wärmezyklus nacheinander umfasst:

- einen ersten Zeitabschnitt (A), im Laufe dessen die Erzeugungsmittel (16, 17) derart gesteuert werden, dass das erste Element aus magnetokalorischem Material (12) auf einer konstanten Temperatur, welche gleich einem zweiten vorbestimmten Wert (K1) ist, der größer als der erste vorbestimmte Wert (K2) ist, gehalten wird,
- einen zweiten Zeitabschnitt (B), im Laufe dessen die Erzeugungsmittel (16, 17) derart gesteuert werden, dass die Temperatur des ersten Elements aus magnetokalorischem Material (12) unter den ersten vorbestimmten Wert (K2) abgesenkt wird,
- einen dritten Zeitabschnitt (C), im Laufe dessen die Erzeugungsmittel (16, 17) derart gesteuert werden, dass das erste Element aus magnetokalorischem Material (12) auf einer konstanten Temperatur, welche gleich einem dritten vorbestimmten Wert (K3) ist, der zwischen dem ersten und dem zweiten vorbestimmten Wert (K1, K2) liegt, gehalten wird.

**Figure 1**

Figure 2

Teslas

Figure 3

## RÉFÉRENCES CITÉES DANS LA DESCRIPTION

**Documents brevets cités dans la description**

- US 5934077 A